# EUROPÄISCHE PATENTSCHRIFT

(11) **EP 1 432 628 B1**
(45) Veröffentlichungstag und Bekanntmachung des Hinweises auf die Patenterteilung: **17.05.2006**
(21) Anmeldenummer: 02785140.1
(22) Anmeldetag: 01.10.2002
(51) Int. Cl.: B65G 45/12

(54) **VERLAGERUNG FÜR FÖRDERBANDABSTREIFER**
DISPLACING DEVICE FOR CONVEYOR BELT SCRAPERS
SYSTEME DE DEPLACEMENT POUR RACLEUR DE COURROIE DE TRANSPORT

(30) Priorität: 06.10.2001 DE 20116439 U; 13.03.2002 DE 10210947
(43) Veröffentlichungstag der Anmeldung: 30.06.2004
(73) Patentinhaber: Schulmeistrat, Hans-Dieter, 46354 Südlohn (DE)
(72) Erfinder: Schulmeistrat, Hans-Dieter, 46354 Südlohn (DE)
(74) Vertreter: Hallermann, Dietrich-Otto
(86) Internationale Anmeldenummer: PCT/EP2002/010986
(87) Internationale Veröffentlichungsnummer: WO 2003/031293

(56) Entgegenhaltungen:
- EP-A- 0 338 118
- DE-A- 4 239 890
- DE-U- 9 216 281
- GB-A- 1 501 250

## Beschreibung

Die Erfindung betrifft eine Verlagerung für Förderbandabstreifer, die im wesentlichen aus beidseitig des Förderbandes in Gehäusen angeordneten Torsionsfederelementen besteht, wobei die Gehäuse mit dem stationären Teil des Förderbandes und die Torsionsfederelemente mit Schwingen verbunden sind, an deren Enden zur Aufnahme der rohrförmigen Enden der die Abstreiferleiste aufnehmenden Tragkonstruktion Hülsen mit Feststellschrauben vorgesehen sind.

Die üblicherweise zur Fördergurtreinigung eingesetzten Abstreifer weisen eine im wesentlichen über die Gurtbreite reichende und rechtwinklig zum Gurt angeordnete Abstreiferleiste auf, die von unten den Untergurt bestreicht. Um den Gurt zu schonen und andererseits effektiv zu reinigen, ist es von Bedeutung, die Abstreiferleiste senkrecht gegen den Gurt anzustellen. Da jedoch die Abstreiferleisten bzw. deren Tragkonstruktionen zum Ausgleich und zur Anpassung an Bandschwingungen und Verschleiß in seitlich des Gurtes angeordneten Torsionsfederelementen verlagert sind, ist die Einstellung des Abstreifers in einer senkrechten Anordnung zum Gurt äußerst schwer durchzuführen bzw. auf eine längere Zeit einzuhalten. Die zwischen den Torsionsfedern bzw. Torsionsfedergehäusen und den Traversenenden vorgesehenen Schwingen vergrößern die Einstellungsschwierigkeiten.

Aus diesem Grund ist es bekannt, die seitlichen Enden der Abstreiferkonstruktionen in Form von rohrartigen Traversen oder Traversenstummeln in mit den Schwingen verbundenen Hülsen zu verlagern, innerhalb derer die Traversen zur Anpassung an die Position zum Gurt verstellt und mittels Schrauben arretiert werden können.

Eine derartige durch Verdrehen erzielbare Winkeleinstellung des Abstreifers ist insbesondere hinsichtlich der erforderlichen Genauigkeit nur sehr schwer einzuhalten. Zum einen können die räumlichen Verhältnisse diese Einstellung erschweren und zum anderen sind aufgrund der schweren und unhandlichen Konstruktionen der Abstreifer solche Einstellungen nur mit großen und schweren Werkzeugen, wie z. B. Rohrzangen, durchzuführen, worunter die Genauigkeit leidet.

Neben einer Winkeleinstellung in der beschriebenen Form sind darüber hinaus Höhenverstelleinrichtungen bekannt, wie sie unter anderem in der DE 4239890 beschrieben sind. Um den Verschleiß einer Abstreiferleiste hinsichtlich einer weiteren effektiven Reinigung des Gurtes auszugleichen, ist die gesamte Verlagerung an einer Höhenverstelleinrichtung angelenkt, die wiederum mit dem stationären Teil des Förderbandes verbunden ist. Bei der bekannten Vorrichtung handelt es sich um eine Zylinder-Kolben-Anordnung, die überaus großbauend und technisch aufwendig ist.

Der Erfindung liegt nunmehr die Aufgabe zugrunde, eine Verlagerung für Förderbandabstreifer zu schaffen, die kleinbauend ist, die handhabungs- und montagefreundlich gestaltet ist, und die darüber hinaus geeignet ist, eine zweckmäßige und effektive Einstellung und Anpassung von gradlinig oder gebogen gestalteten Abstreifern zu ermöglichen.

Diese Aufgabe wird erfindungsgemäß dadurch gelöst, dass an den Schwingen jeweils das Gehäuse einer Höhenverstelleinrichtung und an deren höhenverstellbarem Teil die Hülsen angeordnet sind, und dass an einer der Hülsen seitlich über einen Steg mit dieser verbunden eine weitere Hülse vorgesehen ist, die mittels einer Stellschraube und Kontermuttern als Winkelverstelleinrichtung ausgebildet ist.

Eine besondere Ausgestaltung der Erfindung ist darin zu sehen, dass die Schwingen eine teilweise parallel zum Gehäuse verlaufende 90°-Abwinkelung aufweisen, an deren Ende in senkrechter Form das längliche, im Querschnitt quadratische Gehäuse der Höhenverstelleinrichtung befestigt ist. Durch die Abwinkelung der Schwingen wird eine die Länge der Schwingen verkürzende kompakte Ausführung geschaffen. Die zwischen dem Torsionsfedergehäuse und der die Traverse aufnehmenden Hülse vorgesehene Schwinge besteht in der Gesamtheit aus dem die Höhenverstelleinrichtung tragenden Schwingenabschnitt und einer mit dem innerhalb des Gehäuses der Höhenverstelleinrichtung verstellbaren Schlitten verbundenen Verlängerung, an deren Ende die Hülse befestigt ist.

Der besondere Vorteil der Höhenverstelleinrichtung liegt darin, dass die mit dem Schlitten verbundene Verlängerung durch einen entsprechenden Schlitz ragt und mit dem Schlitten höhenverstellbar ist. Ein weiterer Vorteil der Höhenverstelleinrichtung ist darin zu sehen, dass zur Verstellung des Schlittens innerhalb des Gehäuses der Höhenverstelleinrichtung mindestens am oberen und/oder unteren Ende eine gegen den Schlitten gerichtete Stellschraube mit entsprechender Kontermutter vorgesehen ist. Zweckmäßigerweise geschieht die Höhenverstellung von einer Seite, also von oben oder von unten, während die andere und gegebenenfalls nicht benötigte Schraube mit einer Schutzkappe versehen, keine Verstellfunktion aufweist. Die Arretierung des Schlittens im Gehäuse wird nach der Verstellung durch eine besondere, mit einer Kontermutter versehene Arretierschraube gewährleistet.

Die erfindungsgemäße Winkelverstelleinrichtung besteht im wesentlichen aus einer weiteren, ebenfalls das Traversenende umschließenden Hülse die auf einer Seite der Verlagerung mit der ersten Hülse am Ende der Verlängerung über einen ausladenden Steg und eine Stellschraube verbunden ist. Die am Ende des ausladend geformten, gebogenen Steges angeordnete Stellschraube durchgreift ein mit der zweiten Hülse fest verbundenes Ohr, wobei beidseitig des Ohres Stell- und Kontermuttern vorgesehen sind.

Bei der Montage des Abstreifers werden die Traversenenden in die mit den Verlängerungen der Höhenverstelleinrichtung verbundenen Hülsen zu beiden Seiten des Förderbandes eingeführt und nach Ausrichtung der Abstreiferleisten mit der entsprechenden Vorspannung durch die Höhenverstelleinrichtung in rechtwinkliger Form zum Untergurt mit den entsprechenden Stellschrauben in dieser Lage arretiert. Zur benötigten Nachstellung und Feineinstellung des Winkels, z. B. bei Verschleiß oder bei Einsatz von gebogenen Abstreifern mit der Möglichkeit durch Verstellung des Winkels den Eingriff des Abstreifers z. B. nur auf die Fördergurtmitte zu beschränken, werden die Feststellschrauben mit der mit der Schwingenverlängerung verbundenen Hülsen gelöst und das in der zweiten Hülse arretierte Traversenende wird durch Verstellen der beiderseits des Ohres angeordneten Stellmuttern in die gewünschte Richtung ohne Kraftaufwand verstellt. Hier zeigt sich der besondere Vorteil der Erfindung, dass sowohl die Höhen- als auch die Winkelverstellung mit einem einfachen Schraubenschlüssel vorgenommen werden kann.

Eine besondere Ausgestaltung der Erfindung ist darin zu sehen, dass die Tragkonstruktion zwischen den als Traversenstummel ausgebildeten Enden aus einem Verstärkungsblech und einem mit dem Verstärkungsblech über Verbindungselemente verbundenen, aus der Richtung des ankommenden Förderbandes konkav gebogenen Stützblech besteht, und dass das Stützblech mit einer in der gleichen Form gebogenen Abstreiferleiste mittels Verschraubung verbunden ist.

Der besondere Vorteil einer gebogenen und verstellbaren Abstreiferleiste liegt darin, dass das anhaftende und abzustreifende Fördergut nicht auf einmal über die gesamte Bandbreite abgestreift wird, sondern dass das Fördergut entsprechend der Biegung oder Form der Abstreiferleiste von außen nach innen erfasst und abgestreift wird. Dabei ergibt sich vornehmlich bei nassem Fördergurt der Vorteil, dass das mitgeführte Wasser bzw. tropfenbildende oder Nässe aufweisende Fördergut von außen nach innen eine Wasseranreicherung mit sich bringt, die einen zusätzlichen Reinigungseffekt erzielt.

Ein weiterer Vorteil dieser Ausgestaltung liegt in der geschützten Anordnung der einstückig ausgebildeten, gebogenen Hartmetallschneide, die in einer einseitigen Ausnehmung der Abstreiferleiste eingeklebt und über ein teilweise übergreifendes Stützblech gesichert wird.

Ebenso erweist es sich im Rahmen der Erfindung als besonders vorteilhaft, dass eine Verstellung bzw. eine Verdrehung der Tragkonstruktion in der Achse der seitlich an die Tragkonstruktion angeschweißten Traversenstummel die Möglichkeit schafft, durch die gebogene Form der Abstreiferleiste vornehmlich den mittigen Bandbereich intensiv zu bestreichen und die Randbereiche außer Eingriff zu lassen.

Die Gestaltung der Abstreiferleiste in einer zur Förderrichtung konkaven Form lässt andererseits auch Überlegungen in die Erfindung einbeziehen, die eine konvexe Form in Verbindung mit seitlichen Ableitblechen ebenso einschließen wie die Verwendung gebogener Abstreiferleisten als Vor- oder Hauptabstreifer oder jedwede Kombination von gebogenen Abstreiferleisten hintereinander angeordnet, wenn der entsprechende Bedarf es erfordert.

Zwei Ausführungsbeispiele der Erfindung sind in den Zeichnungen dargestellt und werden im nachfolgenden näher erläutert. Es zeigen:
- Figur 1: eine Draufsicht auf einen Teil einer einseitig eines Förderbandes am stationären Teil des Förderbandes befestigbare Verlagerung, teilweise im Schnitt,
- Figur 2: eine Seitenansicht des in Figur 1 dargestellten Ausführungsbeispiels im Schnitt,
- Figur 3: eine teilweise und im Schnitt wiedergegebene Ansicht der Winkelverstelleinrichtung.
- Figur 4: eine teilweise Draufsicht auf einen erfindungsgemäßen Abstreifer mit einer zu verschraubenden Abstreiferleiste,
- Figur 5: eine Forderansicht einer Abstreiferleiste im Schnitt,
- Figur 6: eine Forderansicht der Tragkonstruktion im Schnitt mit den seitlich angeschweißten Traversenstummeln und
- Figur 7: einen Schnitt durch eine Abstreiferleiste nach den Linien A - A in Figur 4

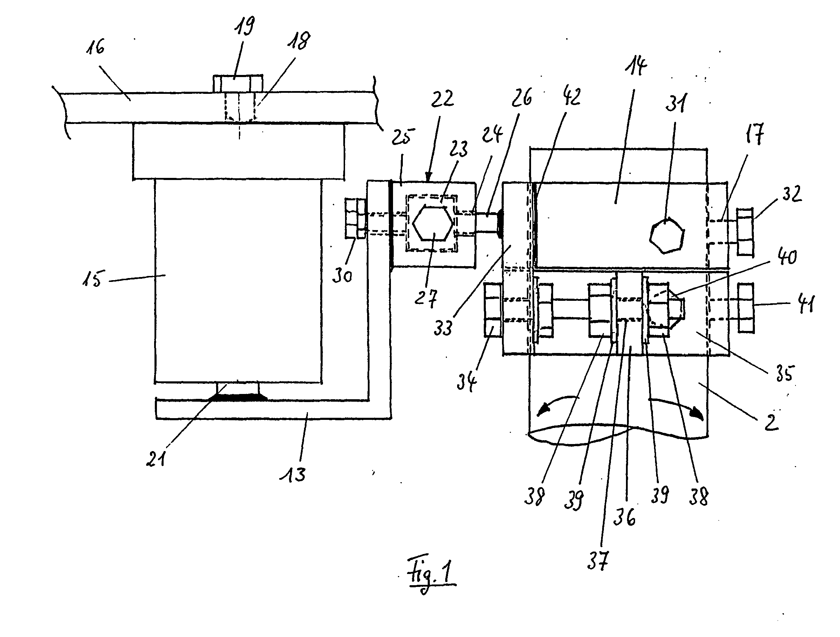

Die in Figur 1 als Ausführungsbeispiel auf einer Seite eines Förderbandes dargestellte Verlagerung für Förderbandabstreifer besteht im wesentlichen aus einem, eine nicht dargestellte Torsionsfeder aufnehmenden Gehäuse 15, das mit einer Schraube 19 und nicht angedeuteter Kontermutter in einer Sackbohrung 18 an dem nur teilweise angedeuteten stationären Teil 16 eines Förderbandes befestigt ist. Die Verbindungen der feststehenden Gehäuse 15 mit dem stationären Teil des Förderbandes sind auf der einen Seite des Förderbandes mit einem Rechts- und auf der anderen Seite mit einem Linksgewinde ausgerüstet, um ein durch Schwingungen verursachtes Lösen der Verbindung zu vermeiden.

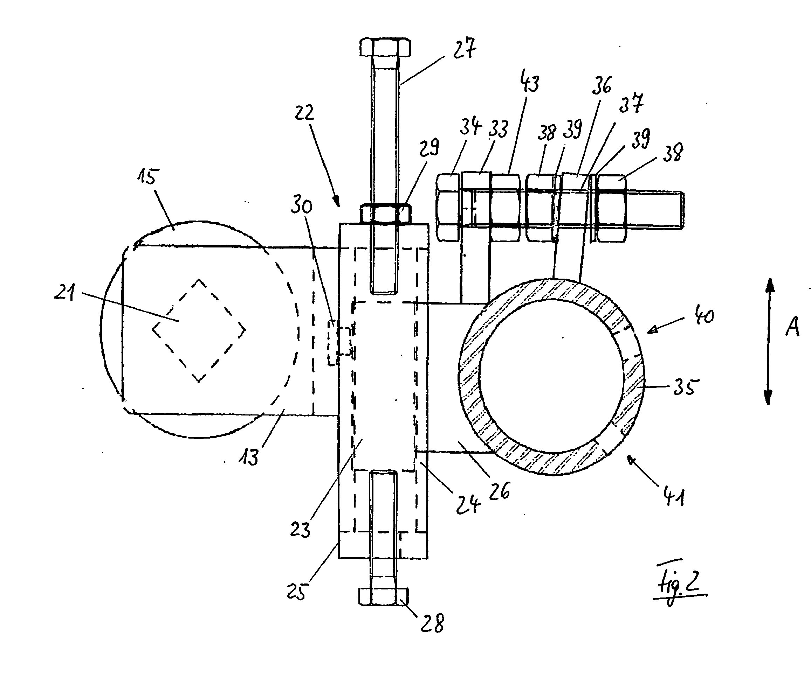

Am innerhalb einer Torsionsfeder verlagerten Vierkant 21 ist eine Schwinge 13 angeschweißt. Um eine besonders kompakte und kleinbauende Verlagerung zu erhalten, ist die Schwinge 13 hinter dem Gehäuse 15 parallel zu diesem abgewinkelt ausgebildet. Am Ende der Abwinkelung ist an die Schwinge 13 die Höhenverstelleinrichtung 22 angeschweißt. Diese besteht, wie insbesondere aus Figur 2 zu entnehmen ist, aus einem länglichen und im Querschnitt quadratischen Gehäuse 25. Das Gehäuse 25 ist hohl ausgebildet und auf der dem Torsionsfedergehäuse 15 abgewandten Seite über nahezu die gesamte Höhe mit einem Schlitz 24 versehen. Innerhalb des Gehäuses 25 ist ein über Stellschrauben 27, 28 in der Höhe verstellbarer Schlitten 23 vorgesehen, dessen Verlängerung 26 den Schlitz 24 durchgreift und an deren Ende die das Traversenende 2 aufnehmende Hülse 14 angeschweißt ist. Um den Schlitten 23 in der durch die Schrauben 27, 28 eingestellten und durch die Kontermutter 29 fixierten Position zu arretieren, ist eine Arretierungsschraube 30 vorgesehen, die zweckmäßigerweise mit einer Kontermutter zu versehen ist.

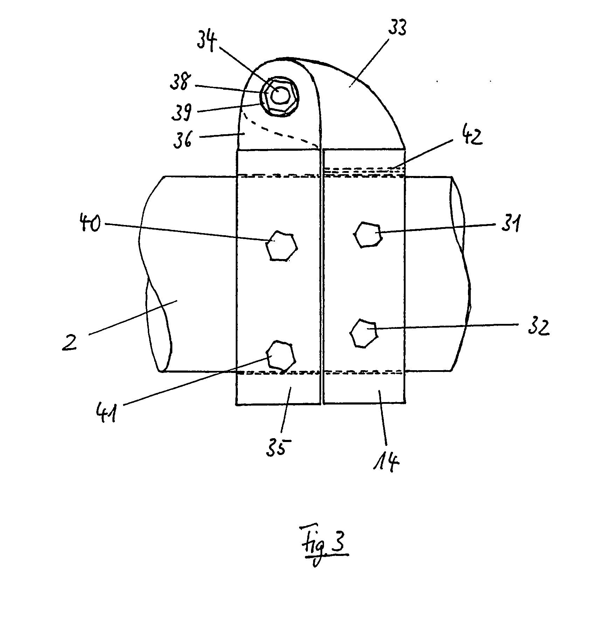

Das Traversenende 2 wird innerhalb der Hülse 14 zu beiden Seiten des Förderbandes mit Stellschrauben 31, 32 arretiert. Wie insbesondere aus Figur 3 zu entnehmen ist, ist an der Hülse 14 ein seitlich ausladender Steg 33 mit einer Schweißnaht 42 angeschweißt, an dessen oberem Ende eine Stellschraube 34 vorgesehen ist, die mittels einer Kontermutter 43 in einer festen Position gehalten wird. Die als Winkelverstelleinrichtung vorgesehene zweite Hülse 35 weist nach oben hin ein Ohr 36 mit einer Bohrung 37 auf, durch welche die Stellschraube 34 geführt ist. Beidseitig des Ohres 36 befinden sich hinter Unterlegscheiben 39 Stell- und Kontermuttern 38, über welche die Traverse 2 winkelverstellbar ist. Zu diesem Zweck müssen die Feststellschrauben 40, 41 zur Arretierung der Traverse 2 angezogen und die Feststellschrauben 31, 32 der Hülsen 14 für diesen Vorgang gelöst werden. Nach dem Verstellen des Winkels werden die Feststellschrauben 31, 32 wieder fest angezogen und die Feststellschrauben 40, 41 können gelöst werden.

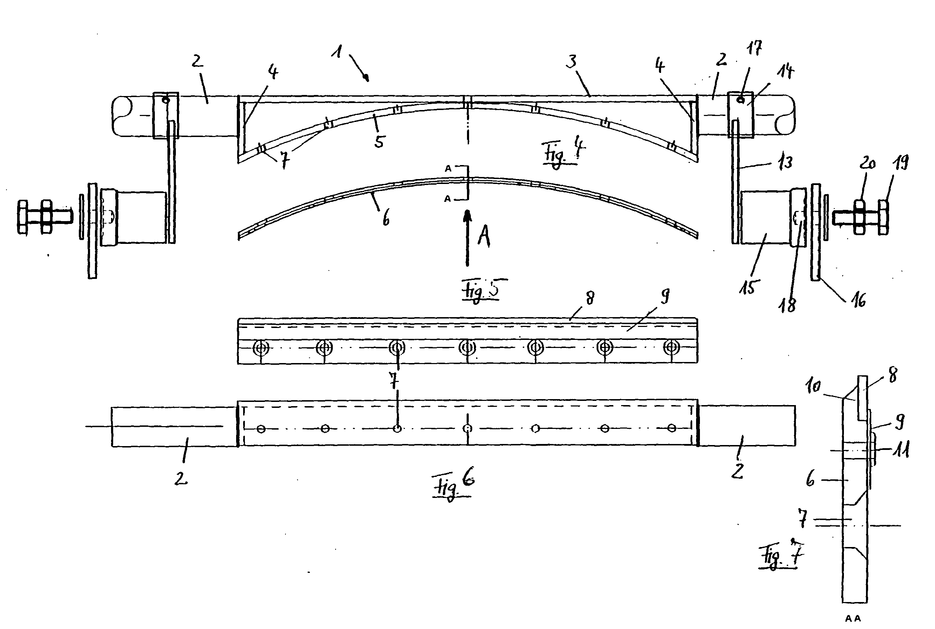

Der als Ausführungsbeispiel gezeigte Förderbandabstreifer besteht nach der in Figur 4 angedeuteten Draufsicht im wesentlichen aus einer Tragkonstruktion 1, deren Enden als rohrförmige Traversenstummel 2 ausgebildet und mittels Hülsen 14 in Schwingen 13 gelagert sind. Die Tragkonstruktion 1 weist ein Verstärkungsblech 3 und ein mit dem Verstärkungsblech 3 über Verbindungselemente 4 zu einer Einheit verbundenes Stützblech auf. Der Pfeil A in Figur 5 gibt die Laufrichtung des nicht dargestellten Förderbandes wieder und dementsprechend weist das Stützblech 5 eine konkav gebogene Form auf. Die Abstreiferleiste 6 ist in der gleichen Form gebogen und wird mittels nicht näher dargestellter Schrauben mit dem Stützblech 5 verbunden. Die die Abstreiferleiste 6 aufnehmende Tragkonstruktion 1 ist innerhalb der Hülsen 14 dreh- oder schwenkbar angeordnet, wobei zur Arretierung der Abstreiferleiste 6 in der gewünschten Position in mindestens eine angedeutete Bohrung 17 entsprechende Schraubenbolzen einschraubbar sind. In dem dargestellten Ausführungsbeispiel ist weder die Höhenverstelleinrichtung 22 noch die zweite Hülse 35 mit der Winkelverstelleinrichtung berücksichtigt.

Die Hülsen 14 bilden die Enden von Schwingen 13, die mit nicht näher dargestellten Torsionsfederelementen verbunden sind. Die die Torsionsfederelemente aufnehmenden Gehäuse 15 werden über in Sackbohrungen 18 einschraubbare Schraubenbolzen 19 mit dem stationären Teil 16 des Förderbandes verbunden und über Kontermuttern 20 gesichert. Die Schraubenbolzen 19 weisen unterschiedliche Gewinde, also einmal Rechts- und auf der anderen Seite Linksgewinde auf, so dass die Schwingbewegung in der einen wie in der anderen Richtung von einer der Verbindungen ohne Lockerungstendenz aufgenommen wird.

Wie aus den Figuren 5 und 7 (nach den Linien A - A in Figur 4) hervorgeht, weist die gebogene Abstreiferleiste 6 am oberen Ende eine einseitige Ausnehmung 10 auf, in welche die Hartmetallschneide 8 eingeklebt wird. Zusätzlich ist auf der das ankommende Fördergut abstreifenden Seite ein die Hartmetallschneide 8 teilweise übergreifendes Stützblech 9 mittels Nieten 11 als Sicherung befestigt. Mit 7 sind die Bohrungen zur Verschraubung der Abstreiferleiste 6 mit dem Stützblech 5 der Tragkonstruktion 1 bezeichnet. Durch Verdrehen der Tragkonstruktion 1 in der Achse der seitlich an die Tragkonstruktion 1 angeschweißten Traversenstummel 2 wird die Möglichkeit geschaffen, durch die gebogene Form der Abstreiferleiste 6 vornehmlich den mittigen Bandbereich intensiv zu bestreichen und die Randbereiche außer Eingriff zu lassen.

### Bezugszeichenliste

- 1: Tragkonstruktion
- 2: Traversenende
- 3: Verstärkungsblech
- 4: Verbindungselement
- 5: Stützblech
- 6: Abstreiferleiste
- 7: Verschraubung
- 8: Hartmetallschneide
- 9: Stützblech
- 10: Anordnung
- 11: Nieten
- 13: Schwinge
- 14: Hülse
- 15: Torsionsfedergehäuse (feststehend)
- 16: stationärer Teil der Förderbandes
- 17: Bohrung für Feststellschraube
- 18: Sackbohrung
- 19: Schraube
- 20: Kontermutter
- 21: Vierkant
- 22: Höhenverstelleinrichtung
- 23: Schlitten
- 24: Schlitz
- 25: Gehäuse
- 26: Verlängerung
- 27: Stellschraube (Höhenverstellung)
- 28: Stellschraube (Höhenverstellung)
- 29: Kontermutter
- 30: Arretierschraube
- 31: Feststellschraube
- 32: Feststellschraube
- 33: Steg
- 34: Stellschraube
- 35: Hülse
- 36: Ohr
- 37: Bohrung
- 38: Stell- u. Kontermutter
- 39: Unterlegscheiben
- 40: Feststellschrauben
- 41: Feststellschrauben
- 42: Schweißnaht
- 43: Kontermutter

## Patentansprüche

1. Verlagerung für Förderbandabstreifer, die im wesentlichen aus beidseitig des Förderbandes in Gehäusen (15) angeordneten Torsionsfederelementen besteht, wobei die Gehäuse (15) mit dem stationären Teil des Förderbandes und die Torsionsfederelemente mit Schwingen (13) verbunden sind, an deren Enden zur Aufnahme der rohrförmigen Enden der die Abstreiferleiste (6) aufnehmenden Tragkonstruktion Hülsen (14) mit Feststellschrauben (31,32) vorgesehen sind, **dadurch gekennzeichnet, dass** an den Schwingen (13) jeweils das Gehäuse (25) einer Höhenverstelleinrichtung (22) und an deren höhenverstellbarem Teil (23) die Hülsen (14) angeordnet sind, und dass an einer der Hülsen (14) seitlich über einen Steg (33) mit dieser verbunden eine weitere Hülse (35) vorgesehen ist, die mittels einer Stellschraube (34) und Kontermuttern (38) als Winkelverstelleinrichtung ausgebildet ist.

2. Verlagerung nach Anspruch 1, **dadurch gekennzeichnet, dass** die Schwingen (13) eine teilweise parallel zum Gehäuse (15) verlaufende 90°-Abwinkelung aufweisen, an deren Ende in senkrechter Form das längliche, im Querschnitt quadratische Gehäuse (25) der Höhenverstelleinrichtung (22) befestigt ist.

3. Verlagerung nach Anspruch 1, **dadurch gekennzeichnet, dass** das hohl ausgebildete Gehäuse (25) auf der dem Torsionsfedergehäuse (15) abgewandten Seite mit einem teilweise über die gesamte Höhe verlaufenden Schlitz (24) versehen ist.

4. Verlagerung nach Anspruch 1, **dadurch gekennzeichnet, dass** innerhalb des Gehäuses (25) ein dem Querschnitt angepasster Schlitten (23) geführt ist, an deren durch den Schlitz (24) greifenden und als Teil der Schwinge (13) ausgebildeten Verlängerung (26) eine Hülse (14) befestigt ist.

5. Verlagerung nach Anspruch 1, **dadurch gekennzeichnet, dass** zur Verstellung des Schlittens (23) innerhalb des Gehäuses (25) der Höhenverstelleinrichtung (22) mindestens am oberen oder unteren Ende eine gegen den Schlitten (23) gerichtete Stellschraube (27, 28) mit Kontermuttern (29) vorgesehen ist.

6. Verlagerung nach Anspruch 1, **dadurch gekennzeichnet, dass** zur Arretierung des Schlittens (23) im Gehäuse (25) eine von außen durch die Gehäusewand gegen den Schlitten (23) gerichtete Arretierschraube (30) vorgesehen ist.

7. Verlagerung nach Anspruch 1, **dadurch gekennzeichnet, dass** an einer der über den Umfang in Abstand mit zwei Feststellschrauben (31, 32) versehenen Hülsen (14) ein seitlich ausladender Steg (33) angeschweißt ist, durch dessen Ende eine Stellschraube (34) geführt ist, über welche eine weitere Hülse (35) zur Winkelverstellung der Abstreiferleiste beaufschlagbar ist.

8. Verlagerung nach Anspruch 7, **dadurch gekennzeichnet, dass** die durch die Stellschraube (34) beaufschlagbare Hülse (35) ein senkrecht abstehendes, eine Bohrung (37) aufweisendes Ohr aufweist und dass die durch die Bohrung (37) geführte Stellschraube (36) beidseitig der Bohrung (36) mit Stell- und Kontermuttern (38) versehen ist.

9. Verlagerung nach Anspruch 7, **dadurch gekennzeichnet, dass** die Hülse (35) über den Umfang verteilt mindestens zwei Feststellschrauben (40, 41) aufweist.

10. Verlagerung nach Anspruch 1, **dadurch gekennzeichnet, dass** die Schraubverbindungen der Feststehenden Gehäuse (15) mit dem stationären Teil (16) des Förderbandes jeweils in einander entgegengesetzter Richtung lös- und feststellbar sind.

11. Verlagerung nach Anspruch 1, **dadurch gekennzeichnet, dass** die mit den Enden (2) der Tragkonstruktion in den beiderseits des Förderbandes in Hülsen (14; 14, 35) gelagerten Förderbandabstreifer eine das Förderband untergreifende, gradlinige oder in Richtung auf das ankommende Förderband gebogene Abstreiferleiste aufweisen.

12. Verlagerung nach den Ansprüchen 1 und 11, **dadurch gekennzeichnet, dass** die Tragkonstruktion (1) zwischen den als Traversenstummel (2) ausgebildeten Enden aus einem Verstärkungsblech (3) und einem mit dem Verstärkungsblech (3) über Verbindungselemente (4) verbundene, aus der Richtung des ankommenden Förderbandes konkav gebogenen Stützblech (5) besteht, und dass das Stützblech (5) mit einer in der gleichen Form gebogenen Abstreiferleiste (6) mittels Verschraubung (7) verbunden ist.

13. Verlagerung für Förderbandabstreifer nach Anspruch 12, **dadurch gekennzeichnet, dass** die am oberen Ende innerhalb einer Ausnehmung (10) der Abstreiferleiste (6) vorgesehene, einstückige Hartmetallschneide (8) mittels eines mit der Abstreiferleiste (6) verbindbaren und die Hartmetallschneide teilweise übergreifenden Stützblechs (9) gesichert angeordnet ist.

14. Verlagerung für Förderbandabstreifer nach Anspruch 12, **dadurch gekennzeichnet, dass** die Hartmetallschneide (8) mit der Abstreiferleiste (6) durch Verkleben fest verbunden ist.

15. Verlagerung für Förderbandabstreifer nach Anspruch 1, **dadurch gekennzeichnet, dass** das Stützblech (5) und die Abstreiferleiste (6) eine konvex gebogene Form aufweisen und an den Enden der Abstreiferleiste (6) das abgestreifte Fördergut in Richtung auf die Fördermitte abweisende Ableitbleche vorgesehen sind.

## Claims

1. A displacement device for conveyor belt scrapers consisting essentially of torsion spring elements arranged on both sides of the conveyor belt in housings (15), wherein the housings (15) are connected to the stationary section of the conveyor belt and the torsion spring elements are connected to rocker arms (13) on whose ends sleeves (14) with set screws (31, 32) are provided for receiving the tubular ends of the supporting structure receiving the scraper plate (6), **characterised in that** the housing (25) of a vertical adjustment device (22) is arranged on each of the rocker arms (13) and the sleeves (14) are arranged on is vertically adjustable section (23), and **in that** on one of the sleeves (14) is provided a further sleeve connected to it by means of a bridge (33), which sleeve (35) is formed by means of an adjusting screw (34) and lock nuts (38) as angular adjustment device.

2. The displacement device according to Claim 1, **characterised in that** the rocker arms (13) have a 90° bevel running partially parallel with the housing (15), to the end of which bevel is secured vertically the oblong housing (25) of the vertical adjustment device (22) that is square in cross-section.

3. The displacement device according to Claim 1, **characterised in that** the hollow housing (25) is provided on the side facing away from the torsion spring housing (15) with a slot (24), a portion of which runs throughout the height.

4. The displacement device according to Claim 1, **characterised in that** a slide (23) adapted to the cross-section is guided inside the housing (25), to whose extension (26), passing through the slot (24) and designed as part of the rocker arm (13), is secured a sleeve (14).

5. The displacement device according to Claim 1, **characterised in that** an adjusting screw (27, 28) directed against the slide (23), with lock nuts (29), is provided at at least the upper or lower end for adjusting the slide (23) inside the housing(25) of the vertical adjustment device (22).

6. The displacement device according to Claim 1, **characterised in that** a locking screw (30), directed from the outside through the housing wall against the slide (23), is provided for locking the slide (23) in the housing (25).

7. The displacement device according to Claim 1, **characterised in that** a laterally loading bridge (33) is welded on one of the sleeves (14) provided with two set screws (31, 32) spaced evenly around the circumference, by means of the end of which bridge is guided an adjusting screw (34) by which a further sleeve (35) may be loaded for angular adjustment of the scraper plate.

8. The displacement device according to Claim 7, **characterised in that** the sleeve (35) that can be loaded by the adjusting screw (34) has a vertically projecting lug provided with a hole 37), and **in that** the adjusting screw guided through the hole (37) is provided on both sides of the hole (36)with adjusting and lock nuts (38).

9. The displacement device according to Claim 7, **characterised in that** the sleeve (35) has at least two set screw (40, 41) distributed around the circumference.

10. The displacement device according to Claim 1, **characterised in that** the screw connections of the fixed housing (15) can be slackened and locked with the stationary section (16) of the conveyor belt in opposite directions.

11. The displacement device according to Claim 1, **characterised in that** the conveyor belt scrapers, mounted with the ends (2) of the supporting structure in the sleeves (14; 14, 35) on both sides of the conveyor belt, have a scraper plate, gripping underneath the conveyor belt, in a straight line or bent in the direction of the approaching conveyor belt.

12. The displacement device according to Claims 1 and 11, **characterised in that** the supporting structure (1) consists of a reinforcing plate (3) between the ends designed as traversing stumps (2), and a support plate (5) connected to the reinforcing plate (3) by connecting elements (4) and bent concavely from the direction of the approaching conveyor belt, and **in that** the support plate (5) is connected by means of a screw connection (7) to a scraper plate (6) bent in the same shape.

13. The displacement device for conveyor belt scrapers according to Claim 12, **characterised in that** the single-piece carbide tipped cutting edge (8), provided at the upper end inside a recess (10) of the scraper plate (6) is arranged so that it is secured by means support plate (9) that can be connected to the scraper plate (6) and partially overlaps the carbide tipped cutting edge.

14. The displacement device for conveyor belt scrapers according to Claim 12, **characterised in that** the carbide tipped cutting edge (8) is permanently connected to the scraper plate (6) by gluing.

15. The displacement device for conveyor belt scrapers according to Claim 1, **characterised in that** the support plate (5) and the scraper plate (6) have convex curved shape, and **in that** deflector plates deflecting the scraped off goods to be conveyed in the direction of the centre of the conveyor are provided at the ends of the scraper plate (6).

## Revendications

1. Dispositif de transfert pour des racleurs de bandes de transport, constitué essentiellement d'éléments de ressorts à torsion disposés dans des boîtiers (15), les boîtiers (15) étant reliés avec la partie stationnaire de la bande de transport et les éléments de ressorts à torsion étant reliés avec des coulisses (13), sur l'extrémité desquelles, pour la réception des extrémités tubulaires de la structure porteuse réceptionnant la baguette racleuse (6) on a prévu des douilles (14), avec des vis d'arrêt (31, 32); **caractérisé en ce que** sur les coulisses (13) est respectivement disposé le boîtier (25) d'un dispositif de réglage en hauteur (22) et sur la partie réglable en hauteur (23) de ce dernier sont disposées les douilles (14) et **en ce que** sur l'une des douilles (14), on a prévu une autre douille (35), latéralement reliée avec cette dernière par l'intermédiaire d'une nervure (33), qui au moyen d'une vis de réglage (34) et de contre-écrous (38) est conçue sous la forme d'un dispositif d'ajustage angulaire.

2. Dispositif de transfert selon la revendication 1, **caractérisé en ce que** les coulisses (13) comportent un coude à 90°, s'étendant partiellement à la parallèle du boîtier (15), sur l'extrémité de laquelle, le boîtier oblong (25) de section transversale quadratique du dispositif de réglage en hauteur (22) est fixé sous forme verticale.

3. Dispositif de transfert selon la revendication 1, **caractérisé en ce que** sur le côté opposé au boîtier de ressorts à torsion (15), le boîtier (25) conçu sous forme creuse est muni d'une fente (24), s'étendant partiellement sur toute la hauteur.

4. Dispositif de transfert selon la revendication 1, **caractérisé en ce qu'**à l'intérieur du boîtier (25) est guidé un chariot (23) adapté à la section transversale, sur le prolongement (26) passant à travers la fente (24) et conçu en tant que partie de la coulisse (13) duquel est fixée une douille (14).

5. Dispositif de transfert selon la revendication 1, **caractérisé en ce que** pour le réglage du chariot (23), on a prévu à l'intérieur du boîtier (25) du dispositif de réglage en hauteur (22), au moins sur l'extrémité supérieure ou inférieure une vis de réglage (27, 28) dirigée vers le chariot (23), avec des contre-écrous (29).

6. Dispositif de transfert selon la revendication 1, **caractérisé en ce que** pour le blocage du chariot (23) dans le boîtier (25), on a prévu une vis de blocage (30) dirigée par l'extérieur contre le chariot (23), à travers la paroi du boîtier.

7. Dispositif de transfert selon la revendication 1, **caractérisé en ce que** sur l'une des douilles (14) munies à distance de deux vis d'arrêt (31, 32), est soudée une nervure (33) faisant latéralement saillie, à travers l'extrémité de laquelle est conduite une vis de réglage (34), à laquelle peut être soumise une douille supplémentaire (35), pour le réglage angulaire de la baguette racleuse.

8. Dispositif de transfert selon la revendication 7, **caractérisé en ce que** la douille (35) pouvant être soumise à la vis de réglage (34) comporte une oreille saillant latéralement, munie d'un alésage (37) et **en ce que** la vis de réglage (36) introduite dans l'alésage (37) est munie d'écrous de réglage et de contre-écrous (38), des deux côtés de l'alésage (36).

9. Dispositif de transfert selon la revendication 7, **caractérisé en ce que** la douille (35) comporte au moins deux vis d'arrêt (40, 41) réparties sur la périphérie.

10. Dispositif de transfert selon la revendication 1, **caractérisé en ce que** les assemblages par vis des boîtiers fixes (15) sont amovibles et peuvent être bloqués respectivement en direction mutuellement opposée avec la partie stationnaire (16) de la bande de transport.

11. Dispositif de transfert selon la revendication 1, **caractérisé en ce que** les racleurs de bande de transport logés par les extrémités (2) de la structure porteuse dans des douilles (14 ; 14, 35), des deux côtés de la bande de transport comportent une baguette racleuse s'accrochant par le dessous sur la bande de transport, rectiligne ou courbée en direction de la bande transporteuse qui arrive.

12. Dispositif de transfert selon les revendications 1 et 11, **caractérisé en ce qu'**entre les extrémités conçues sous la forme de tronçons de traverses (2), la structure porteuse (1) est constituée en une tôle de renfort (3) et en une tôle support (5), courbée de façon concave à partir de la direction de la bande de transport qui arrive, qui est reliée par l'intermédiaire d'éléments de liaison (4) avec la tôle de renfort (3) et **en ce que** la tôle de support (5) est reliée par l'intermédiaire d'un assemblage par vis (7), avec un baguette racleuse (6) courbée sous la même forme.

13. Dispositif de transfert pour un racleur de bande de transport selon la revendication 12, **caractérisé en ce que** la lame monobloc en métal dur (8) prévue sur l'extrémité supérieure, dans un évidement (10) de la baguette racleuse (6) est disposée de façon bloquée au moyen d'une tôle support (9) pouvant être reliée avec la baguette racleuse (6) et chevauchant partiellement la lame en métal dur.

14. Dispositif de transfert pour un racleur de bande de transport selon la revendication 12, **caractérisé en ce que** la lame en métal dur (8) est fixement reliée par collage avec la baguette racleuse (6).

15. Dispositif de transfert pour un racleur de bande de transport selon la revendication 1, **caractérisé en ce que** la tôle support (5) et la baguette racleuse (6) ont une forme courbe convexe et **en ce qu'**on a prévu sur les extrémités de la baguette racleuse (6) des déflecteurs détournant la marchandise transportée retirée vers le centre du sens de transport.
